# EUROPÄISCHE PATENTSCHRIFT

(11) **EP 3 951 120 B1**
(45) Veröffentlichungstag und Bekanntmachung des Hinweises auf die Patenterteilung: **28.08.2024**
(21) Anmeldenummer: 21188787.2
(22) Anmeldetag: 30.07.2021
(51) Int. Cl.: E05B 17/00

(54) **SCHUTZTÜRÜBERWACHUNGSMODUL**
SAFETY DOOR MONITORING MODULE
MODULE DE SURVEILLANCE DE LA PORTE DE PROTECTION

(30) Priorität: 06.08.2020 DE 102020120817
(43) Veröffentlichungstag der Anmeldung: 09.02.2022
(73) Patentinhaber: Pilz GmbH & Co. KG, 73760 Ostfildern (DE)
(72) Erfinder: Veit, Andreas, 73760 Ostfildern (DE)
(74) Vertreter: Witte, Weller & Partner Patentanwälte mbB

(56) Entgegenhaltungen:
- EP-A2- 1 597 997
- CN-A- 108 910 665

## Beschreibung

Die vorliegende Erfindung betrifft ein Schutztürüberwachungsmodul zur Überwachung eines Zustands einer Schutztür, mit einem Grundgerät zur Erzeugung eines Schutztürsignals und einem relativ zu dem Grundgerät beweglichen Betätiger zum Betätigen des Grundgeräts, wobei das Grundgerät eine Betätigeraufnahme zur Aufnahme des Betätigers aufweist und dazu eingerichtet ist, das Schutztürsignal zu erzeugen, wenn der Betätiger in die Betätigeraufnahme eingeführt ist.

Gemäß einem weiteren Aspekt betrifft die vorliegende Erfindung eine Schutztür mit einem Schutztürüberwachungsmodul der oben genannten Art, wobei das Grundgerät an einem ersten Teil der Schutztür und der Betätiger an einem zweiten Teil der Schutztür angeordnet ist, wobei der erste Teil und der zweite Teil der Schutztür bei einem Öffnen der Schutztür voneinander getrennt werden.

Gemäß einem weiteren Aspekt betrifft die vorliegende Erfindung ein Schutztürüberwachungssystem mit einer Schutztür als Zugang zu einem Sicherheitsbereich, einem Schutztürüberwachungsmodul der oben genannten Art, und einer Steuerungseinheit, welche dazu eingerichtet ist, das Schutztürsignal auszulesen und eine im Sicherheitsbereich befindliche Maschine oder Anlage in Abhängigkeit des Schutztürsignals zu steuern.

Schutztürüberwachungsmodule der oben genannten Art werden häufig auch als Sicherheitsschalter bezeichnet. Ein Schutztürüberwachungsmodul bzw. Sicherheitsschalter der eingangs genannten Art ist aus der DE 10 2005 057 108 A1 bekannt. Weitere beispielhafte Schutztürüberwachungsmodule sind aus der DE 103 05 704 B3 und aus der DE 10 2008 060 004 A1 bekannt.

Gattungsgemäße Schutztürüberwachungsmodule werden an Schutztüren, Schutzklappen und dergleichen eingesetzt. Wenngleich vorliegend der Begriff "Schutztürüberwachungsmodul" und "Schutztür" verwendet wird, kann das erfindungsgemäße Schutztürüberwachungsmodul an jeglicher Art von trennender Schutzeinrichtung zum Einsatz kommen. Der Begriff "Schutztür" ist im vorliegenden Sinne dementsprechend weit aufzufassen.

Anstelle des allgemeinen Begriffs "trennende Schutzeinrichtung" wird daher im Folgenden ausschließlich der Begriff "Schutztür" verwendet, ohne dass dies eine Beschränkung des Schutzbereichs zur Folge haben soll.

Schutztüren, an denen das erfindungsgemäße Schutztürüberwachungsmodul bspw. zum Einsatz kommen kann, dienen typischerweise als Zugang zu einem Sicherheitsbereich, in dem sich eine automatisiert arbeitende Maschine oder Anlage befindet. Bei der Maschine kann es sich bspw. um einen Roboter, eine Werkzeugmaschine mit schnelldrehender Spindel, eine Transport- oder Förderanlage, eine Presse oder eine andere Maschine oder Anlage handeln, von deren Betrieb eine Gefahr für Personen ausgeht, die sich in dem genannten Sicherheitsbereich bzw. im Arbeitsbereich der Maschine befinden. Das Schutztürüberwachungsmodul kann als Meldegerät dienen, mit dessen Hilfe eine Steuerungseinheit den geschlossenen Zustand der Schutztür erkennen kann. Die Steuerungseinheit ist dazu eingerichtet, das von dem Schutztürüberwachungsmodul erzeugte Schutztürsignal auszulesen und die Maschine in Abhängigkeit des Schutztürsignals zu steuern. Beispielsweise ist ein Betreiben der Maschine nur bei Vorhandensein des Schutztürsignals möglich. Die Steuerungseinheit ist also mit anderen Worten dazu eingerichtet, ein Betreiben der Maschine oder Anlage nur dann zu ermöglichen, wenn sie das Schutztürsignal von dem Schutztürüberwachungsmodul empfängt, d.h. wenn die Schutztür geschlossen ist. Wird die Schutztür hingegen im laufenden Betrieb geöffnet (sofern möglich), muss die Steuerungseinheit die Maschine oder Anlage in einen gefahrlosen Zustand bringen, in dem bspw. die Stromversorgung zu der Maschine oder Anlage abgeschaltet wird.

Es gibt eine Vielzahl von Maschinen und Anlagen, von denen auch nach dem Abschalten noch für eine gewisse Zeit eine Gefahr ausgeht, bspw. weil die Maschine oder Anlage noch ausläuft. Für derartige Anwendungsfälle werden Schutztürüberwachungsmodule benötigt, die ein Öffnen der Schutztür so lange verhindern, bis die Maschine oder Anlage ihren gefahrlosen Zustand erreicht hat. Diese Funktion wird als Zuhaltung bezeichnet.

Klassischerweise besitzen Schutztürüberwachungsmodule der vorliegenden Art einen sog. Betätiger und eine als Gegenstück dazu fungierende Betätigeraufnahme. Die Betätigeraufnahme ist Teil eines Grundgeräts, in dem typischerweise weitere elektronische Bauteile untergebracht sind und von dem meist die Anschlussleitungen ausgehen, die das Schutztürüberwachungsmodul mit der Steuerungseinheit verbinden. Dementsprechend ist das Grundgerät mit der Betätigeraufnahme vorzugsweise an einem unbeweglichen Teil der Schutztür (z.B. an einer Türzarge) angeordnet, während der Betätiger vorzugsweise an einem beweglichen der Schutztür (z.B. an einem beweglichen Türflügel) angeordnet ist. Dies hat den Vorteil, dass der Teil des Schutztürüberwachungsmoduls, der an dem beweglichen Teil der Schutztür angeordnet ist, nicht mit Strom versorgt werden muss, da in der Regel nur das Grundgerät des Schutztürüberwachungsmoduls mit Strom versorgt werden muss.

Bei geschlossener Schutztür greift der Betätiger in die Betätigeraufnahme, was mit Hilfe eines oder mehrerer Sensoren detektiert wird. Bei einem Schutztürüberwachungsmodul mit Zuhaltung wird der Betätiger außerdem in der Betätigeraufnahme gegen ein Zurückziehen blockiert bzw. verriegelt. Die sog. Zuhaltung weist daher vorzugsweise eine Verriegelungseinrichtung zum Verriegeln des Betätigerelements in der Betätigeraufnahme auf.

In dem letztgenannten Fall erfüllt das Schutztürüberwachungsmodul also zwei Funktionen, nämlich einerseits eine Detektionsfunktion, mit dessen Hilfe die Schließposition der Schutztür detektiert wird, und andererseits eine Zuhaltefunktion, die ein Öffnen der Schutztür solange verhindert, wie der Betätiger in der Betätigeraufnahme verriegelt ist. Die Freigabe des Betätigers kann bspw. über einen elektromotorischen Aktor erfolgen, der von der Steuerungseinheit betätigt wird, sobald die überwachte Maschine oder Anlage ihren sicheren Zustand eingenommen hat.

Ein Schutztürüberwachungsmodul dieser Art wird von der Anmelderin unter dem Namen PSENmlock vertrieben. Dieses Schutztürüberwachungsmodul funktioniert einwandfrei und ist vielseitig einsetzbar. Die Form und Ausgestaltung des Betätigers und der Betätigeraufnahme dieses Schutztürüberwachungsmoduls haben in der Praxis allerdings teilweise zu Nachteilen geführt. Der Betätiger dieses Schutztürüberwachungsmoduls ist im Wesentlichen stab- bzw. stiftförmig ausgestaltet. Die als Gegenstück dazu fungierende Betätigeraufnahme ist als Sackloch oder Durchgangsloch ausgestaltet, in das der stab- bzw. stiftförmige Betätiger eingeführt wird. Zum einen ergibt sich aus dieser Art der Formgestaltung ein relativ hohes Potential für Verletzungen, da insbesondere der Betätiger formbedingt verletzungsgefährlich ist. Zum anderen müssen Betätiger und Betätigeraufnahme relativ exakt zueinander ausgerichtet werden, da der stab- bzw. stiftförmige Betätiger ansonsten nicht exakt die Position des zugehörigen Sacklochs trifft und damit nicht in dieses einführbar ist. Zudem lässt die Flexibilität des Schutztürüberwachungsmoduls in Bezug auf unterschiedliche Einbausituationen zu wünschen übrig. Je nach Einbausituation muss die Position und Ausrichtung des Betätigers aus vorgenannten Gründen, nämlich individuell, relativ zu der Betätigeraufnahme angepasst werden.

EP 1 597 997 A1 zeigt weiteren Stand der Technik in Form einer Türverriegelungsvorrichtung für einen Geschirrspüler mit einem Verriegelungsring.

Es ist daher eine Aufgabe der vorliegenden Erfindung, ein Schutztürüberwachungsmodul bereitzustellen, das in Bezug auf unterschiedliche Arten von Einbausituationen flexibler handhabbar ist und von dem im Übrigen auch eine geringere Verletzungsgefahr ausgeht.

Gemäß einem Aspekt wird diese Aufgabe durch ein Schutztürüberwachungsmodul gemäß Anspruch 1 oder 11 gelöst. Weitere Ausführungen sind in den abhängigen Ansprüchen offenbart.

Das im Wesentlichen ringförmige Betätigerelement ist aus vielerlei Hinsicht vorteilhaft. Die Ringform ermöglicht sehr kleine Einschwenk-Radien. Dies ist insbesondere bei Schutztüren, die als kleine Klappen ausgestaltet sind, von Vorteil.

Von dem im Wesentlichen ringförmigen Betätigerelement geht auch nur eine relativ geringe Verletzungsgefahr aus, da der Betätiger ohne spitze Kanten auskommt. Vorzugswiese ist das Betätigerelement ringförmig ausgestaltet.

Als besonders vorteilhaft zeigt sich das im Wesentlichen ringförmige Betätigerelement in Bezug auf die damit relativ variabel gestalteten Möglichkeiten in Bezug auf die Zuführungsrichtung des Betätigers relativ zu der Betätigeraufnahme. Aufgrund der Ringform lässt sich das Betätigerelement nämlich von unterschiedlichen Seiten sehr einfach in die Betätigeraufnahme einführen. Dies gilt für unterschiedlichste Einbausituationen. Betätiger und Betätigeraufnahme müssen daher lange nicht so exakt zueinander ausgerichtet werden, wie dies bei den bisher bekannten Schutztürüberwachungsmodulen mit stabförmigen Betätigern und als Sackloch ausgebildeten Betätigeraufnahmen der Fall war.

Aufgrund der Rotationssymmetrie des im Wesentlichen ringförmigen Betätigerelements ist es möglich, die Einbausituation des Betätigers oder der Betätigeraufnahme zu ändern, ohne die Einbausituation des jeweiligen Gegenstücks (Betätiger oder Betätigeraufnahme) ändern zu müssen, da der Betätiger auch nach der Änderung noch in die Betätigeraufnahme einführbar ist. Ein- und Umbau des erfindungsgemäßen Schutztürüberwachungsmoduls gestalten sich daher vergleichsweise einfach.

Zudem ist es grundsätzlich möglich, ein und denselben Betätiger "links wie rechts", also sozusagen beidseitig zu verwenden, bspw. in Kombination mit einer ersten Betätigeraufnahme, in die der Betätiger bei geöffneter Tür eingeführt ist, und einer zweiten Betätigeraufnahme, in die der Betätiger bei geschlossener Tür eingeführt ist.

Im Übrigen lässt sich die Betätigeraufnahme als Gegenstück zu dem im Wesentlichen ringförmigen Betätigerelement relativ frei zugänglich ausgestalten, so dass Wartung und Reparatur von Betätiger und Betätigeraufnahme ebenfalls vereinfacht sind. Zudem sind Betätiger und Betätigeraufnahme vergleichsweise schmutzunempfindlich.

Der Begriff "im Wesentlichen ringförmig" ist vorliegend breit aufzufassen. Mit dem Zusatz "im Wesentlichen" ist einerseits gemeint, dass das Betätigerelement im erfindungsgemäßen Sinn nicht vollständig ringförmig ausgestaltet sein muss. Es genügt auch, wenn nur Teile des Betätigerelements ringförmig ausgestaltet sind. Andererseits sollen unter den Begriff "im Wesentlichen ringförmig" nicht nur kreisringförmige Gebilde fallen, sondern auch andere geschlossene Konturen, die im Wesentlichen der Form eines Rings entsprechen. Das erfindungsgemäße Betätigerelement muss somit in der Draufsicht betrachtet nicht zwangsläufig kreisringförmig sein, sondern kann beispielsweise auch oval oder polygonal sein oder die Form einer Schlaufe oder eine sonstige komplexe Form aufweisen, die im Wesentlichen ringförmig ist. Als im Wesentlichen ringförmig sind daher nahezu alle Gebilde anzusehen, die ein zentrales Durchgangsloch aufweisen, das von einer geschlossenen Kontur umgeben ist. Die geschlossene Kontur weist vorzugsweise zumindest bogenförmige Abschnitte auf.

Die Betätigeraufnahme und das Betätigerelement sind derart ausgestaltet, dass das Betätigerelement in mindestens zwei verschiedenen räumlichen Ausrichtungen relativ zu dem Grundgerät in die Betätigeraufnahme einführbar ist.

Selbst wenn man die räumliche Lage des Betätigerelement ändert, lässt es sich also mit anderen Worten nach wie vor in die Betätigeraufnahme einführen, um das Schutztürsignal zu erzeugen. Das Betätigerelement lässt sich also bspw. aus zwei unterschiedlichen Raumrichtungen in die Betätigeraufnahme einführen. Dies liegt insbesondere an der im Wesentlichen ringförmigen Ausgestaltung des Betätigerelements und der damit verbundenen Möglichkeit, die Betätigeraufnahme relativ frei zugänglich für das Betätigerelement ausgestalten zu können.

Es versteht sich, dass sich die zuvor beschriebenen Möglichkeiten der Einführbarkeit des Betätigerelement in die Betätigeraufnahme nur auf generelle Möglichkeiten beziehen, die geometrisch bedingt denkbar sind. In der Praxis wird die räumliche Lage des Betätigerelements relativ zu der Betätigeraufnahme für den geschlossenen Zustand der Schutztür meist nicht geändert. Die beschriebene grundsätzliche Möglichkeit, den Betätiger aus unterschiedlichen Raumrichtungen in die Betätigeraufnahme einzuführen, ermöglicht jedoch eine große Vielfalt verschiedener generell denkbarer Einbaumöglichkeiten und vereinfacht die Montage des Schutztürüberwachungsmoduls.

Die mindestens zwei verschiedenen räumlichen Ausrichtungen umfassen eine erste räumliche Ausrichtung und eine zweite räumliche Ausrichtung des Betätigerelements relativ zu dem Grundgerät, wobei die zweite räumliche Ausrichtung im Vergleich zu der ersten räumlichen Ausrichtung um eine erste Raumachse um 90° rotiert ist.

Das Betätigerelement lässt sich also mit anderen Worten um eine Achse um 90° rotieren und wäre dann dennoch in die Betätigeraufnahme einführbar. Anders ausgedrückt, kann der Betätiger also in zwei unterschiedlichen räumlichen Ausrichtungen an der Schutztür angebracht werden, die um 90° verdreht zueinander sind, ohne dass die Ausrichtung des Grundgeräts verändert werden muss. Auch hier versteht es sich, dass in der Praxis eine einmal gewählte Ausrichtung, die durch die Montage des Betätigers an der Schutztür definiert wird, nicht später einfach geändert wird. Es geht jedoch auch hier um die generelle Möglichkeit der verschiedenen Montagevarianten des erfindungsgemäßen Schutztürüberwachungsmoduls an einer Schutztür.

Ferner umfassen die mindestens zwei verschiedenen räumlichen Ausrichtungen, in denen das Betätigerelement relativ zu dem Grundgerät in die Betätigeraufnahme einführbar ist, eine erste, eine zweite und eine dritte räumliche Ausrichtung des Betätigerelements relativ zu dem Grundgerät, wobei die zweite räumliche Ausrichtung im Vergleich zu der ersten räumlichen Ausrichtung um eine erste Raumachse um 90° rotiert ist, und wobei die dritte räumliche Ausrichtung im Vergleich zu der ersten räumlichen Ausrichtung um eine zweite Raumachse, die orthogonal zu der ersten Raumachse ausgerichtet ist, um 90° rotiert ist.

Das Betätigerelement lässt sich also mit anderen Worten um zwei verschiedene Raumrichtungen um jeweils 90° rotieren und ist dann immer noch in die Betätigeraufnahme einführbar. Die im Wesentlichen ringförmige Ausgestaltung des Betätigerelements und die entsprechende Ausgestaltung der Betätigeraufnahme ermöglichen somit also diverse räumliche Ausrichtungen (Lagen) von Betätigerelement und Betätigeraufnahme relativ zueinander.

Gemäß einer weiteren Ausgestaltung hat das Betätigerelement zumindest abschnittsweise die Form eines Torus.

Das Betätigerelement hat gemäß dieser Ausgestaltung also die Form eines Rettungsrings bzw. Donuts mit kreisförmigem Querschnitt. Wenngleich vorliegend auch andere Querschnittsformen möglich und dennoch als "im Wesentlichen ringförmig" anzusehen sind, erleichtert ein kreisförmiger Querschnitt das Einführen des Betätigerelements in die Betätigeraufnahme zusätzlich. Auch die Verletzungsgefahr wird durch diese Formgebung verhindert, da scharfe Kanten generell vermieden werden.

Mit der Definition "zumindest abschnittsweise die Form eines Torus" ist gemeint, dass das Betätigerelement nicht zwangsweise die Form eines Volltorus haben muss, sondern auch Teile eines Torus aufweisen kann.

Gemäß einer weiteren Ausgestaltung weist das Betätigerelement eine Ringmutter auf.

Diese Ausgestaltung hat insbesondere den Vorteil, dass es sich bei einer solchen Ringmutter um ein Normteil handelt. Hierdurch lassen sich insbesondere gegenüber speziell angefertigten Bauteilen die Herstellungskosten reduzieren.

Gemäß einer weiteren Ausgestaltung weist das Grundgerät einen Sensor oder ein Lesegerät auf, der bzw. das detektiert, ob der Betätiger in die Betätigeraufnahme eingeführt ist. Vorzugsweise weist das Betätigerelement ein Identifikationsobjekt auf und der Sensor oder das Lesegerät ist dazu eingerichtet, das Identifikationsobjekt automatisch und berührungslos zu detektieren, wobei das Grundgerät dazu eingerichtet ist, das Schutztürsignal zu erzeugen, wenn der Sensor oder das Lesegerät das Identifikationsobjekt detektiert.

Bei dem Sensor kann es sich um einen elektromechanischen Sensor (bspw. um einen Druckknopf) handeln. Besonders bevorzugt ist der Sensor bzw. das Lesegerät als berührungsloser Sensor bzw. als berührungsloses Lesegerät ausgestaltet. Beispielsweise kann es sich um einen optischen Sensor mit zum Beispiel einer oder mehreren Kameras handeln. Ebenso kann es sich um ein RFID-Lesegerät handeln, das über ein am Betätiger angebrachten RFID-Transponder/Tag detektiert, ob der Betätiger in die Betätigeraufnahme eingeführt ist. Dies ermöglicht eine eindeutige Erkennung des Betätigers sowie eine Unterscheidung von anderen Betätigers. Hierdurch wird unter anderem die Manipulationssicherheit des Schutztürüberwachungsmoduls erhöht.

Bei dem Identifikationsobjekt handelt es sich vorzugsweise um einen RFID-Transponder, einem RFID-Tag oder ein RFID-Chip, der von dem in das Grundgerät integrierten Lesegerät detektierbar und eindeutig identifizierbar ist.

Diese Ausgestaltung hat den Vorteil, dass mithilfe des RFID-Transponders eindeutig nachweisbar ist, ob der "richtige" und nicht beispielsweise ein manipuliertes Betätigerelement in die Betätigeraufnahme eingeführt wurde. Hierdurch ist die Manipulationssicherheit erhöht.

Gemäß einer weiteren Ausgestaltung weist das Betätigerelement zumindest eine Aufnahme auf, in der das Identifikationsobjekt montierbar ist. Vorzugsweise ist das Identifikationsobjekt (z.B. der RFID-Transponder/Tag/Chip) lösbar in die zumindest eine Aufnahme des Betätigerelements montierbar. Dies ermöglicht einen einfachen Austausch des Identifikationsobjekts im Falle einer Fehlfunktion.

Besonders bevorzugt weist das Betätigerelement gemäß dieser Ausgestaltung mehrere Aufnahmen auf, in der das Identifikationsobjekt jeweils lösbar montierbar ist. Dies ermöglicht es, das Identifikationsobjekt je nach Einbausituation des Betätigers und der Betätigeraufnahme in einer entsprechenden Aufnahme am Betätigerelement zu montieren. Hierdurch wird die Flexibilität des Schutztürüberwachungsmoduls in Bezug auf diverse Einbauvarianten weiter vergrößert.

Gemäß einer weiteren Ausgestaltung weist der Betätiger einen Montage-Sockel auf, an den das Betätigerelement angeordnet ist, wobei das Betätigerelement ein erstes Identifikationsobjekt aufweist und der Montage-Sockel ein zweites Identifikationsobjekt aufweist, wobei das Grundgerät dazu eingerichtet ist, das Schutztürsignal zu erzeugen, wenn der Sensor oder das Lesegerät das erste und das zweite Identifikationsobjekt detektiert.

Bei den beiden genannten Identifikationsobjekten handelt es sich vorzugsweise um zwei verschiedene RFID-Transponder/Tags/Chips. Durch diese Ausgestaltung wird die Manipulationssicherheit des Schutztürüberwachungsmoduls weiter erhöht, da das Schutztürsignal nur dann erzeugt, wenn der Sensor oder das Lesegerät beide Identifikationsobjekte gleichzeitig detektiert. Damit kann einerseits die Sicherheit erhöht werden, dass das Betätigerelement auch tatsächlich korrekt in die Betätigeraufnahme eingeführt ist. Andererseits kann sichergestellt werden, dass der Betätiger nicht beschädigt ist, also bspw. das Betätigerelement von dem Montage-Sockel abgebrochen ist. Zudem sind weitere Anwendungsmöglichkeiten denkbar, in denen die beiden verschiedenen Identifikationsobjekte unterschiedliche Identifikationskennungen ermöglichen.

Gemäß einer weiteren Ausgestaltung weist der Betätiger eine Halterung auf, an der das Betätigerelement lösbar befestigt ist, wobei sich das Betätigerelement in seiner Position relativ zu der Halterung justieren und in einer gewünschten Position an der Halterung arretieren lässt.

Je nach Einbausituation lässt sich die Position des ringförmigen Betätigerelements somit relativ zu der Betätiger-Halterung ändern. Die Betätiger-Halterung kann bspw. an dem zuvor genannten Montage-Sockel angeordnet sein. Insbesondere in Kombination mit der zuvor erwähnten Verwendung eines oder mehrerer am Betätigerelement angebrachten Identifikationsobjekten ist diese Ausgestaltung von Vorteil, da die Justierbarkeit des Betätigerelements eine relativ einfache und exakte Möglichkeit bietet, das mindestens eine Identifikationsobjekt relativ zu dem im Grundgerät angeordneten Sensor oder Lesegerät auszurichten.

Gemäß einer weiteren Ausgestaltung ist die Betätigeraufnahme in einem Längsschnitt des Grundgeräts betrachtet klauen-, haken- oder U-förmig und für das Betätigerelement von einem Schwenkbereich aus zugänglich, der sich über mindestens 90° erstreckt und in einer Ebene liegt, die orthogonal zu dem Längsschnitt ausgerichtet ist.

Die Betätigeraufnahme ist also mit anderen Worten derart ausgestaltet, dass sie für das Betätigerelement aus diversen Richtungen, die innerhalb des genannten Schwenkbereichs bzw. in der genannten Ebene liegen, zugänglich ist. Besonders bevorzugt erstreckt sich der genannte Schwenkbereich über mindestens 120°. Hierdurch wird die Montageflexibilität des erfindungsgemäßen Schutztürüberwachungsmoduls weiter erhöht. Das Schutztürüberwachungsmodul ist damit sowohl für Schutztüren geeignet, die als Schiebetüren ausgestaltet sind als auch für Schutztüren geeignet, die als Schwenktüren ausgestaltet sind. In letzterem Fall (Schwenktür) ermöglicht die variable Zugänglichkeit der Betätigeraufnahme für das Betätigerelement auch Anwendungen in Schwenktüren mit sehr kleinen Einschwenk-Radien.

Gemäß einer weiteren Ausgestaltung weist die Betätigeraufnahme eine Verriegelungseinrichtung zum Verriegeln des Betätigerelements in der Betätigeraufnahme auf.

Diese Verriegelungseinrichtung ermöglicht die eingangs beschriebene Funktion der Zuhaltung. Vorzugsweise handelt es sich bei der Verriegelungseinrichtung um eine mechanische Verriegelungseinrichtung, die in die zentrale Öffnung des ringförmigen Betätigerelements eingreift. Dies garantiert eine sichere Zuhaltung, die hohen Kräften widersteht.

Gemäß einer Ausgestaltung weist die Verriegelungseinrichtung ein Verriegelungselement auf, das elektrisch ansteuerbar ist, um dieses zu lösen und damit das Betätigerelement freizugeben.

Dieses Verriegelungselement kann, wie eingangs erwähnt, über die Steuerungseinheit des Schutztürüberwachungssystems angesteuert werden, sobald sich die abzusichernde Maschine in einem sicheren Zustand befindet. Das Verriegelungselement kann z.B. ein mechanisches Verriegelungselement oder ein magnetisches Verriegelungselement aufweisen.

Handelt es sich bei dem Verriegelungselement um ein mechanisches Verriegelungselement, so ist dieses vorzugsweise federgelagert. Dies hat den Vorteil, dass das Verriegelungselement federgelagert zurückweicht, wenn das Betätigerelement in die Betätigeraufnahme eingeführt wird. Das Betätigerelement lässt sich somit sehr einfach in die Betätigeraufnahme einführen, wobei die Verriegelungseinrichtung automatisch aktiviert ist. Die automatische Aktivierung der Verriegelungseinrichtung wird vorzugsweise dadurch bewirkt, dass das Verriegelungselement derart ausgestaltet ist, dass es aufgrund seiner Federlagerung zwar zurückweicht, wenn das Betätigerelement in die Betätigeraufnahme eingeführt wird, das Betätigerelement dann aber in der Betätigeraufnahme blockiert. Erst durch die zuvor besprochene elektrische Ansteuerung bei Freigabe durch die Steuerungseinheit des Schutztürüberwachungssystems wird die Verriegelungseinrichtung wieder freigegeben, so dass sich das Betätigerelement aus der Betätigeraufnahme lösen lässt.

Gemäß einer Ausgestaltung weist die Verriegelungseinrichtung mindestens eines der folgenden Bauteile aufweist:
- einen drehbar gelagerten Winkelhebel, der in das im Wesentlichen ringförmige Betätigerelement eingreift;
- eine federgelagerte Sperrklinke; oder
- zwei federgelagerte Verschlussteile, die in der Art einer Zange in das im Wesentlichen ringförmige Betätigerelement eingreifen.

Selbstverständlich sind die oben genannten Bauteile auch miteinander kombinierbar. Bei allen genannten Bauteilen handelt es sich um relativ kostengünstige Bauteile, die dennoch eine sichere Art der Verriegelung des Betätigerelements und damit die Funktion der Zuhaltung des Schutztürüberwachungsmoduls sicher gewährleisten.

Wie eingangs bereits erwähnt, betrifft ein weiterer Aspekt der vorliegenden Erfindung eine Schutztür, an der ein erfindungsgemäßes Schutztürüberwachungsmodul montiert ist. Die oben genannten und in den abhängigen Ansprüchen definierten Ausgestaltungsmöglichkeiten beziehen sich äquivalent auch auf die Schutztür mit dem erfindungsgemäßen Schutztürüberwachungsmodul.

Die Schutztür weist vorzugsweise einen ersten Teil, an dem das Grundgerät des Schutztürüberwachungsmoduls angeordnet ist, sowie einen zweiten Teil, an dem der Betätiger des Schutztürüberwachungsmoduls angeordnet ist, auf. Die beiden Teile der Schutztür werden bei einem Öffnen der Schutztür voneinander getrennt. Das Betätigerelement des Betätigers befindet sich daher nur in geschlossenem Zustand der Schutztür in der Betätigeraufnahme des Grundgeräts.

Vorzugsweise handelt es sich bei dem ersten Teil der Schutztür, an dem das Grundgerät angeordnet ist, um einen unbewegten Teil der Schutztür (z.B. um einen Türrahmen oder eine Türzarge). Äquivalent dazu handelt es sich bei dem zweiten Teil der Schutztür, an dem der Betätiger angeordnet ist, vorzugsweise um ein bewegliches Türelement (z.B. ein Türflügel). Die Anordnung des Grundgeräts an dem unbewegten Teil der Schutztür hat den Vorteil, dass eine Stromversorgung des am beweglichen Teil der Schutztür montierten Teils des Schutztürüberwachungsmoduls unterbleiben kann, da typischerweise nur das Grundgerät des Schutztürüberwachungsmoduls mit Strom versorgt werden muss.

Wie eingangs ebenfalls bereits erwähnt, betrifft ein weiterer Aspekt der vorliegenden Erfindung ein Schutztürüberwachungssystem, das eine Schutztür der zuvor genannten Art (inklusive erfindungsgemäßem Schutztürüberwachungsmodul) aufweist.

Gemäß einer Ausgestaltung weist das erfindungsgemäße Schutztürüberwachungssystem nicht nur ein Grundgerät des Schutztürüberwachungsmoduls, sondern zwei Grundgeräte des Schutztürüberwachungsmoduls auf. Gemäß dieser Ausgestaltung genügt jedoch nach wie vor ein einziger Betätiger.

Das Schutztürüberwachungsmodul weist somit gemäß der zuvor genannten Ausgestaltung ein erste Grundgerät mit einer ersten Betätigeraufnahme zur Aufnahme des Betätigers und ein zweites Grundgerät mit einer zweiten Betätigeraufnahme zur Aufnahme des Betätigers auf. Das erste und das zweite Grundgerät sind jeweils dazu eingerichtet, ein erstes bzw. ein zweites Schutztürsignal zu erzeugen, wenn der Betätiger in die erste bzw. in die zweite Betätigeraufnahme eingeführt ist. Die beiden Grundgeräte sind gemäß dieser Ausgestaltung derart angeordnet, dass der Betätiger in die erste Betätigeraufnahme eingeführt ist, wenn sich die Schutztür in einer geschlossenen Stellung befindet, und dass der Betätiger in die zweite Betätigeraufnahme eingeführt, wenn sich die Schutztür in einer geöffneten Stellung befindet. Die Steuerungseinheit ist dann dazu eingerichtet, das erste und das zweite Schutztürsignal auszulesen und die im Sicherheitsbereich befindliche Maschine oder Anlage in Abhängigkeit des ersten und des zweiten Schutztürsignals zu steuern.

Dies bedeutet mit anderen Worten, dass das erfindungsgemäße Schutztürüberwachungsmodul mit zwei Grundgeräten ausgestattet sein kann, wobei ein Grundgerät den geschlossenen Zustand der Schutztür überwacht und das andere den geöffneten Zustand der Schutztür überwacht. Somit ist eine sichere Überwachung, vorzugsweise inklusive Zuhaltung, beider Türzustände mit ein und demselben Schutztürüberwachungsmodul gewährleistet. Ein Grund, weshalb dies möglich ist, ist wiederum die zuvor beschriebene flexible Zuführmöglichkeit des Betätigers bzw. des Betätigerelements in die jeweilige Betätigeraufnahme. Aufgrund der im Wesentlichen ringförmigen Ausgestaltung des Betätigerelements lässt sich dieses nämlich "links wie rechts" verwenden. An einer Schiebetür oder einer Schwenktür angeordnet, lässt sich das im Wesentlichen ringförmige Betätigerelement des Betätiger in zwei gegenüberliegend montierte Betätigeraufnahmen verschiedener Grundgeräte einführen, ohne dass dazu die Orientierung des Betätigers relativ zu der Schiebe-/Schwenktür geändert werden muss.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen.
- Fig. 1: eine schematische Darstellung eines Schutztürüberwachungssystems gemäß einem Ausführungsbeispiel der vorliegenden Erfindung;
- Fig. 2: eine perspektivische Ansicht eines Schutztürüberwachungsmoduls gemäß einem Ausführungsbeispiel der vorliegenden Erfindung in einer geöffneten Stellung;
- Fig. 3: eine perspektivische Ansicht des in Fig. 2 gezeigten Schutztürüberwachungsmoduls in einer geschlossenen Stellung;
- Fig. 4: eine perspektivische Ansicht, in der verschiedene Einbaumöglichkeiten eines Betätigers des in Fig. 2 und 3 gezeigten Schutztürüberwachungsmoduls dargestellt sind;
- Fig. 5A: eine perspektivische Ansicht des Betätigers des Schutztürüberwachungsmoduls gemäß einem zweiten Ausführungsbeispiel;
- Fig. 5B: eine Draufsicht auf den in Fig. 5A dargestellten Betätiger;
- Fig. 6A: eine perspektivische Ansicht des Betätigers des Schutztürüberwachungsmoduls gemäß einem dritten Ausführungsbeispiel;
- Fig. 6B: eine Draufsicht auf den in Fig. 6A dargestellten Betätiger;
- Fig. 7A: eine Längsschnittansicht einer Betätigeraufnahme und eines Betätigers des erfindungsgemäßen Schutztürüberwachungsmoduls gemäß einem weiteren Ausführungsbeispiel in geöffneter Stellung;
- Fig. 7B: eine Längsschnittansicht der in Fig. 7A gezeigten Betätigeraufnahme und des in Fig. 7A gezeigten Betätigers in einer geschlossenen Stellung;
- Fig. 8A: eine Längsschnittansicht der Betätigeraufnahme und des Betätigers des erfindungsgemäßen Schutztürüberwachungsmoduls gemäß einem weiteren Ausführungsbeispiel in einer geöffneten Stellung;
- Fig. 8B: eine Längsschnittansicht der in Fig. 8B gezeigten Betätigeraufnahme und des in Fig. 8B gezeigten Betätigers in einer geschlossenen Stellung;
- Fig. 9A: eine Schnittansicht der Betätigeraufnahme und des Betätigers des erfindungsgemäßen Schutztürüberwachungsmoduls gemäß einem weiteren Ausführungsbeispiel in einer geöffneten Stellung;
- Fig. 9B: eine Schnittansicht der Betätigeraufnahme aus Fig. 9A und des Betätigers aus Fig. 9A in einer geschlossenen Stellung;
- Fig. 10A: eine Längsschnittansicht der Betätigeraufnahme und des Betätigers des erfindungsgemäßen Schutztürüberwachungsmoduls gemäß einem weiteren Ausführungsbeispiel in einer geöffneten Stellung;
- Fig. 10B: eine Längsschnittansicht der in Fig. 10A gezeigten Betätigeraufnahme und des in Fig. 10A gezeigten Betätigers in einer geschlossenen Stellung;
- Fig. 11A: eine schematische Darstellung eines ersten Anwendungsbeispiels des erfindungsgemäßen Schutztürüberwachungsmoduls in einer ersten Stellung;
- Fig. 11B: eine schematische Darstellung des in Fig. 11A gezeigten ersten Anwendungsbeispiels des erfindungsgemäßen Schutztürüberwachungsmoduls in einer zweiten Stellung;
- Fig. 12A: eine schematische Darstellung eines zweiten Anwendungsbeispiels des erfindungsgemäßen Schutztürüberwachungsmoduls in einer ersten Stellung;
- Fig. 12B: eine schematische Darstellung des in Fig.12A gezeigten zweiten Anwendungsbeispiels des erfindungsgemäßen Schutztürüberwachungsmoduls in einer zweiten Stellung;
- Fig. 13A: eine schematische Darstellung eines dritten Anwendungsbeispiels des erfindungsgemäßen Schutztürüberwachungsmoduls in einer ersten Stellung;
- Fig. 13B: eine schematische Darstellung des in Fig.13A gezeigten dritten Anwendungsbeispiels des erfindungsgemäßen Schutztürüberwachungsmoduls in einer zweiten Stellung; und
- Fig. 14A-14E: eine schematische Darstellung mehrerer Ausführungsbeispiele eines im Wesentlichen ringförmigen Betätigerelements jeweils in einer Draufsicht.

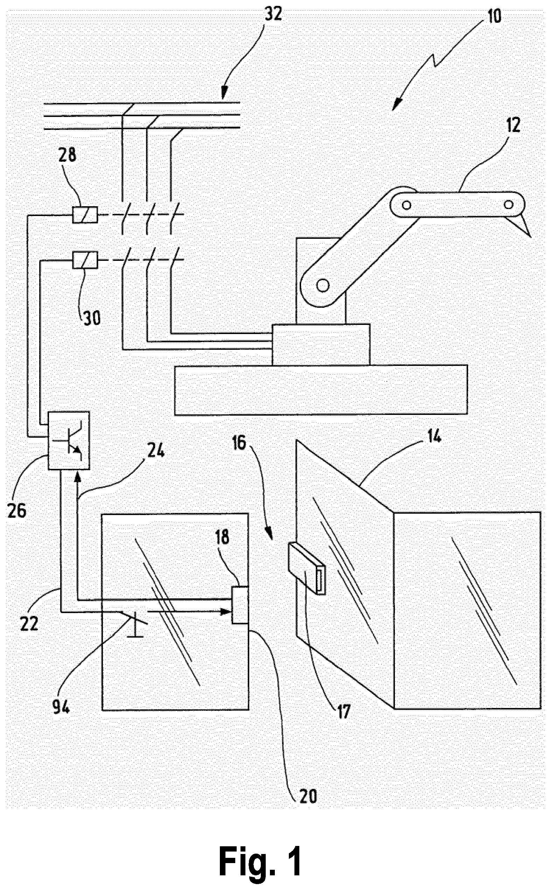

Fig. 1 zeigt eine schematische Ansicht eines Ausführungsbeispiels eines erfindungsgemäßen Schutztürüberwachungssystems. Das Schutztürüberwachungssystem ist darin in seiner Gesamtheit mit der Bezugsziffer 10 bezeichnet.

Das Schutztürüberwachungssystem 10 beinhaltet hier einen Roboter 12, dessen Arbeitsbereich mit Hilfe einer Schutztür 14 abgesichert ist. An der Schutztür 14 ist ein Schutztürüberwachungsmodul 16 gemäß der vorliegenden Erfindung angeordnet. Das Schutztürüberwachungsmodul 16 umfasst ein Türteil 17, das an dem beweglichen Türelement (Türflügel) der Schutztür 14 angeordnet ist, und ein Rahmenteil 18, das an einem unbeweglichen zweiten Teil 20 der Schutztür angeordnet ist. In dem dargestellten Ausführungsbeispiel handelt es sich bei dem unbeweglichen zweiten Teil 20 der Schutztür 14 um einen Türrahmen bzw. eine Türzarge. In anderen Ausführungsbeispielen kann dieser zweite unbewegliche Teil 20 der Schutztür 14 auch ein zweiter Türflügel einer zweiteiligen Schutztür sein.

Das Rahmenteil 18 ist über zwei Leitungen 22, 24 mit einem Sicherheitsschaltgerät 26 verbunden. Das Sicherheitsschaltgerät 26 ist bspw. ein Sicherheitsschaltgerät aus der Reihe PNOZ^{®}, das von der Anmelderin der vorliegenden Erfindung vertrieben wird. Es handelt sich hierbei um ein mehrkanalig-redundantes Sicherheitsschaltgerät, das dazu ausgebildet ist, die Ausgangssignale von Meldegeräten, wie dem Schutztürüberwachungsmodul 16, auszuwerten und in Abhängigkeit davon einen elektrischen Verbraucher abzuschalten. Der elektrische Verbraucher ist in diesem Fall der Roboter 12. Dementsprechend steuert das Sicherheitsschaltgerät 26 zwei Schütze 28, 30 an, deren Arbeitskontakte in der Verbindung zwischen einer Stromversorgung 32 und dem Roboter 12 angeordnet sind. Alternativ zu dem Sicherheitsschaltgerät 26 könnte das Schutztürüberwachungsmodul 16 auch an eine programmierbare Sicherheitssteuerung angeschlossen sein, wie sie von der Anmelderin der vorliegenden Erfindung unter der Bezeichnung PSS^{®} vertrieben wird. Das Sicherheitsschaltgerät 26 wird daher nachfolgend allgemein als Steuerungseinheit 26 des Schutztürüberwachungssystems 10 bezeichnet, ohne dadurch auf eine spezielle Ausgestaltung dieser Steuerungseinheit beschränkt zu sein. Im Folgenden werden mehrere Ausführungsbeispiele des erfindungsgemäßen Schutztürüberwachungsmoduls 16 beschrieben. Gleiche oder äquivalente Bauteile werden dabei mit den gleichen Bezugszeichen bezeichnet.

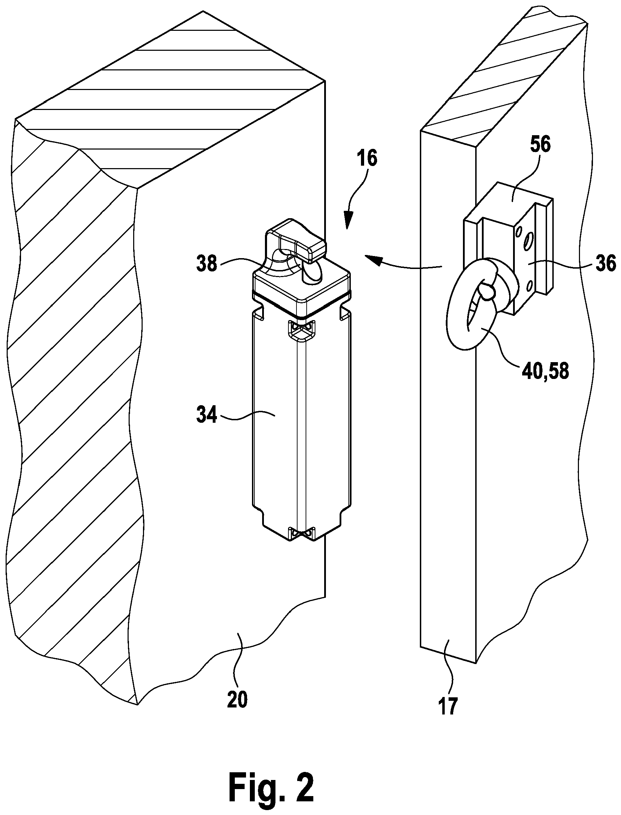

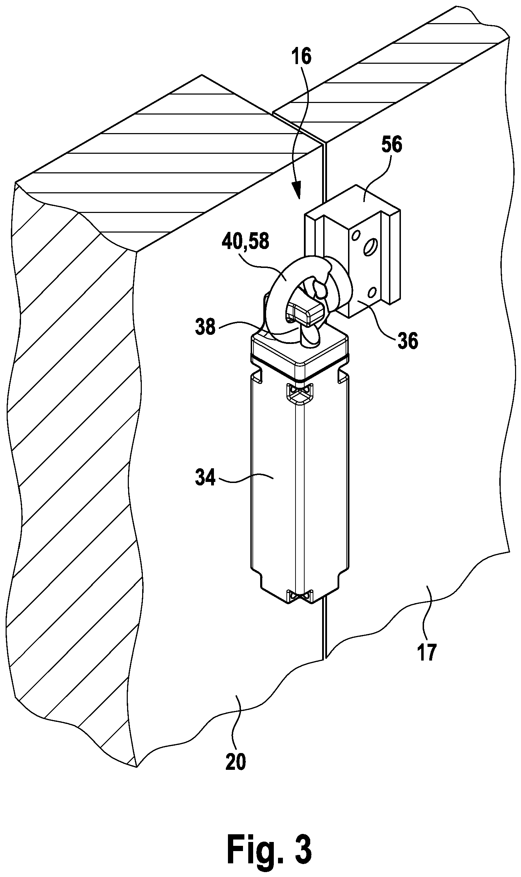

Fig. 2 und 3 zeigen ein erstes Ausführungsbeispiel des Schutztürüberwachungsmoduls 16 jeweils in einer perspektivischen Ansicht. Fig. 2 zeigt dabei das Schutztürüberwachungsmodul 16 in einer geöffneten Stellung der Schutztür 14. Fig. 3 zeigt das Schutztürüberwachungsmodul 16 in einer geschlossenen Stellung der Schutztür 14.

Das Schutztürüberwachungsmodul 16 umfasst ein Grundgerät 34. Das Grundgerät 34 weist vorzugsweise einen oder mehrere Sensoren und/oder weitere elektronische Bauteile auf und ist daher vorzugsweise an eine Stromversorgung angeschlossen. Des Weiteren ist das Grundgerät 34 vorzugsweise über mehrkanalig-redundante Leitungen, wie hier die Leitungen 22, 24 mit der Steuerungseinheit 26 verbunden. Das Grundgerät 34 bildet daher vorzugsweise das zuvor erwähnte Rahmenteil 18 des Schutztürüberwachungsmoduls 16.

Wenngleich es ebenso denkbar wäre, das Grundgerät 34 als Türteil 17 des Schutztürüberwachungsmoduls 16 einzusetzen, ist dies eher weniger bevorzugt. In einem solchen Fall müsste die meist feste Verdrahtung mit der Steuerungseinheit 26 sowie die Stromversorgung an den beweglichen Teil der Schutztür 14 hingeführt sein, was in der Regel umständlicher ist als eine Zuführung der Leitungen 22, 24 sowie der Stromversorgung an den statischen Teil 20 der Schutztür 14.

Das Schutztürüberwachungsmodul 16 umfasst des Weiteren einen Betätiger 36. Dieser Betätiger 36 fungiert als Gegenstück zu dem Grundgerät 34. Der Betätiger 36 dient der Betätigung des Grundgeräts 34. Das Grundgerät 34 weist hierzu eine entsprechende Betätigeraufnahme 38 auf, in die der Betätiger 36 einführbar ist (siehe Fig. 3).

Eine Funktion des Grundgeräts 34 ist es, zu detektieren, ob der Betätiger 36 in die Betätigeraufnahme 38 eingeführt ist oder nicht. Das Grundgerät 34 ist dazu eingerichtet, ein Schutztürsignal zu erzeugen, wenn der Betätiger 36 in die Betätigeraufnahme 38 eingeführt ist. Dieses Schutztürsignal wird vorzugsweise als elektrisches Signal erzeugt. Es kann sich hierbei um ein digitales, ein gepulstes, ein codiertes und/oder sonstiges (vorzugsweise elektrisches) Signal handeln. Durch Auswertung des Schutztürsignals in der Steuerungseinheit 26 kann das Schutztürüberwachungssystem 10 zu jeder Zeit eindeutig feststellen, ob die Schutztür 14 geschlossen ist oder nicht. Der Roboter 12 kann in Abhängigkeit dessen derart gesteuert werden, dass dieser nur bei geschlossener Schutztür 14 betreibbar ist.

Der Betätiger 36 des Schutztürüberwachungsmoduls 16 weist ein im Wesentlichen ringförmiges Betätigerelement 40 auf, das in die Betätigeraufnahme 38 einführbar ist. Wie in Fig. 3 gezeigt, ist das im Wesentlichen ringförmige Betätigerelement 40 im geschlossenen Zustand der Schutztür 14 in die Betätigeraufnahme 38 eingeführt. Aufgrund seiner Ringform lässt sich das Betätigerelement 40 relativ einfach und von unterschiedlichsten Seiten aus in die Betätigeraufnahme 38 einführen. Auch kleinste Einschwenk-Radien, wie sie bspw. bei kleineren Klappen oder sehr kleinen Schutztüren auftreten, werden dadurch möglich. Formbedingt geht kaum eine Verletzungsgefahr von dem Betätigerelement 40 aus, da dieses weder spitze noch eckige Kanten aufweist.

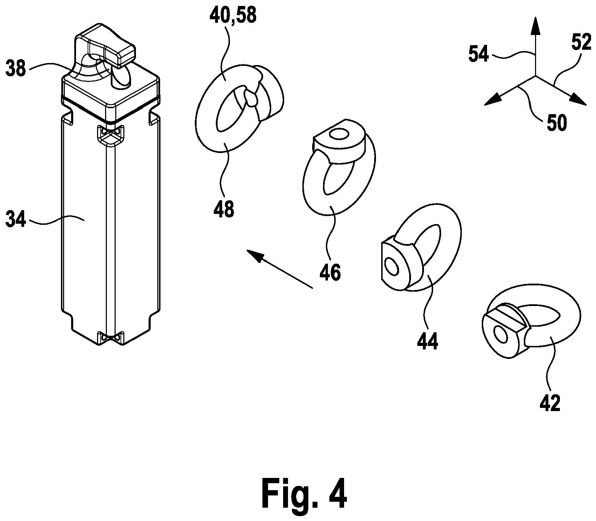

Ein weiterer Vorteil der im Wesentlichen ringförmigen Ausgestaltung des Betätigerelements 40 besteht darin, dass dieses nicht nur aus unterschiedlichen Zuführrichtungen, sondern auch in unterschiedlichen räumlichen Ausrichtungen in die Betätigeraufnahme 38 einführbar ist. Fig. 4 zeigt schematisch vier verschiedene räumliche Ausrichtungen des Betätigerelements 40. Bezugszeichen 42 kennzeichnet eine erste räumliche Ausrichtung des Betätigerelements 40, Bezugszeichen 44 eine zweite räumliche Ausrichtung, Bezugszeichen 46 eine dritte räumliche Ausrichtung und Bezugszeichen 48 eine vierte räumliche Ausrichtung dessen. In der zweiten räumliche Ausrichtung 44 ist das Betätigerelement 40 im Vergleich zu seiner ersten räumlichen Ausrichtung 42 bspw. um 90° um eine erste Raumachse 50 rotiert. In der dritten räumlichen Ausrichtung 46 ist das Betätigerelement 40 im Vergleich zu seiner zweiten räumlichen Ausrichtung 44 bspw. um eine zweite Raumachse 52 um 90° rotiert. Die dritte räumliche Ausrichtung 46 ist im Vergleich zu der ersten räumlichen Ausrichtung 42 mit anderen Worten also um 90° um die erste Raumachse und um weitere 90° um die zweite Raumachse rotiert. In der vierten räumlichen Ausrichtung 48 ist das Betätigerelement 40 im Vergleich zu seiner dritten räumlichen Ausrichtung 46 um 180° um die zweite Raumachse 52 rotiert. Anders ausgedrückt, ist das Betätigerelement 40 in der vierten räumlichen Ausrichtung 48 im Vergleich zu seiner ersten räumlichen Ausrichtung 42 um 90° um die erste Raumachse 50 und um weitere 180° um eine dritte Raumachse 54 rotiert. Alle drei genannten Raumachsen 50, 52, 54 sind orthogonal zueinander ausgerichtet.

In all den in Fig. 4 gezeigten räumlichen Ausrichtungen ist das Betätigerelement 40 problemlos in die Betätigeraufnahme 38 einführbar. Wie leicht zu erkennen ist, handelt es sich bei den in Fig. 4 gezeigten Ausrichtungsmöglichkeiten nur um vier exemplarische Möglichkeiten. Selbstverständlich sind diverse weitere Ausrichtungsmöglichkeiten des Betätigerelements relativ zu der Betätigeraufnahme 38 möglich, unter denen sich nach wie vor eine bestimmungsgemäße Verwendung des erfindungsgemäßen Schutztürüberwachungsmoduls 16 realisieren lässt. Das erfindungsgemäße Schutztürüberwachungsmodul 16 ist damit für unterschiedlichste Einbausituationen geeignet und in diversen verschiedenen Anwendungen einsetzbar. Grundlage dafür ist insbesondere die rotationssymmetrische Ausbildung des Betätigerelements 40.

Es versteht sich jedoch, dass im Falle einer Montage des Betätigerelements 40 an der Schutztür 14 typischerweise nur eine der in Fig. 4 exemplarisch gezeigten Einbaumöglichkeiten gewählt wird, die anschließend meist nicht mehr verändert wird. Zur Erleichterung der Montage weist der Betätiger 36 vorzugsweise einen Montage-Sockel 56 auf. Als im Wesentlichen ringförmiges Betätigerelement 40 fungiert in dem vorliegend gezeigten Ausführungsbeispiel eine Ringmutter 58. Diese Ringmutter 58 ist lösbar, in diesem Fall mit Hilfe einer Schraube, an dem Montage-Sockel 56 befestigt.

Ferner versteht es sich, dass die in Fig. 4 gezeigten Ausrichtungen lediglich einige von vielen möglichen Ausrichtungen des Betätigerelements 40 sind. Beispielsweise sind auch Zwischenlagen denkbar, die sich räumlich zwischen den in Fig. 4 gezeigten Ausrichtungen befinden.

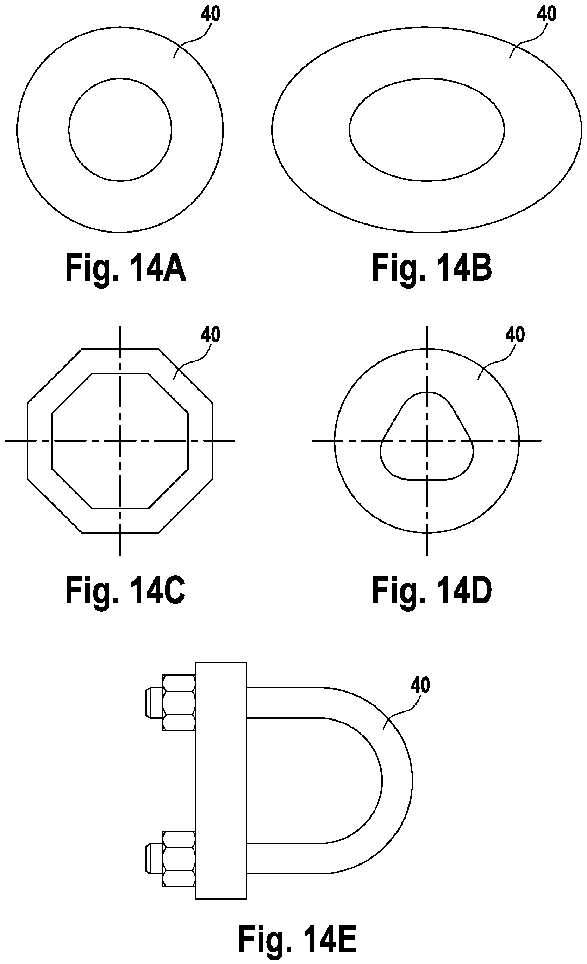

Auch die Form des Betätigerelements 40 muss nicht zwangsweise torusförmig sein, wie es in dem in Fig. 4 gezeigten Ausführungsbeispiel der Fall ist. Weitere Ausführungsbeispiele des im Wesentlichen ringförmigen Betätigerelements 40 sind in Fig. 14A-14E jeweils schematisch in einer Draufsicht gezeigt. In Fig. 14A ist das Betätigerelement 40 in der Draufsicht kreisringförmig. In Fig. 14B ist das Betätigerelement 40 in der Draufsicht oval. In Fig. 14C ist das Betätigerelement 40 in der Draufsicht polygonal. Gemäß der in Fig. 14D gezeigten Ausführungsform ist die Innenkontur des Betätigerelements 40 in der Draufsicht eine andere als die Außenkontur des Betätigerelements 40. Während die Innenkontur in der Draufsicht im Wesentlichen dreieckig abgerundet ist, ist die Außenkontur in der Draufsicht kreisförmig. In Fig. 14E ist das Betätigerelement 40 als halbrunde Schlaufe ausgestaltet, die auf eine Platte oder ein Sockel montiert ist. All die in Fig. 14A-14E gezeigten Formen des Betätigerelements 40 sind als "im Wesentlichen ringförmig" im erfindungsgemäßen Sinn anzusehen.

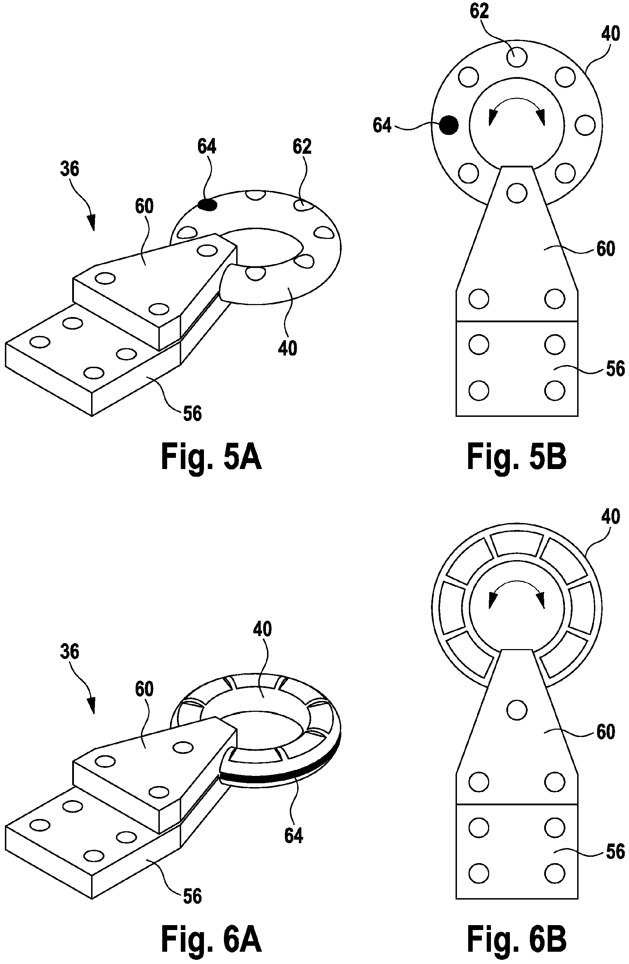

Fig. 5 und 6 zeigen zwei weitere Ausführungsbeispiele des Betätigers 36. Der Montage-Sockel 56 weist darin jeweils eine Halterung 60 auf, an der das ringförmige Betätigerelement 40 lösbar befestigt ist. Diese Halterung 60 ist in den beiden in Fig. 5 und 6 gezeigten Fällen als Klemmhalterung ausgestaltet. Das ringförmige Betätigerelement 40 ist somit relativ zu der Halterung 60 frei justierbar. Das ringförmige Betätigerelement 40 lässt sich insbesondere um seine Mittelachse, die die Symmetrieachse des ringförmigen Betätigerelements 40 bildet, rotierbar.

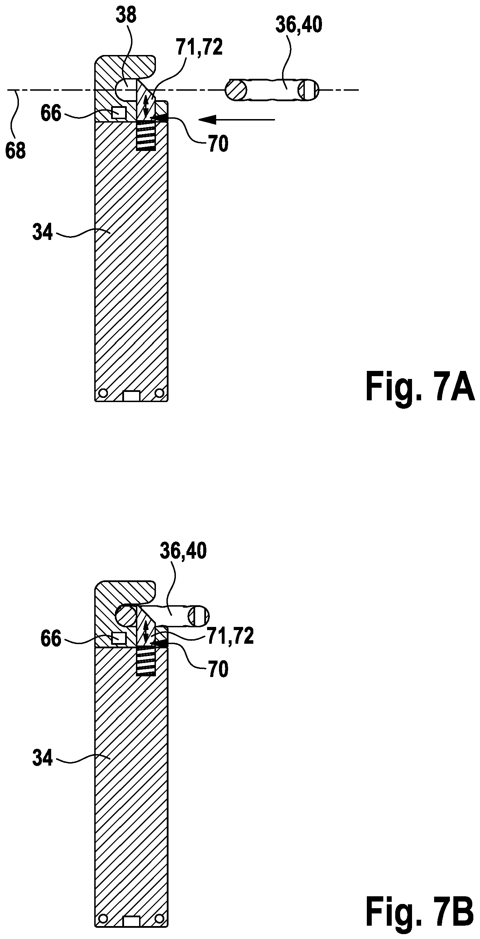

In der in Fig. 5A und 5B gezeigten Ausführungsform weist das Betätigerelement 40 mehrere Aufnahmen 62 zur Aufnahme jeweils eines Identifikationsobjektes 64 auf. Die Aufnahmen 62 sind in dem in Fig. 5A und 5B gezeigten Fall als Sacklochbohrungen ausgestaltet. Bei dem Identifikationsobjekt 64 handelt es sich vorzugsweise um ein Identifikationsobjekt, das das ringförmige Betätigerelement 40 eindeutig identifizierbar macht. Zur Erkennung des Identifikationsobjekts 64 kann in das Grundgerät 34 ein Sensor oder Lesegerät 66 integriert sein (siehe Fig. 7A und 7B), das dazu eingerichtet ist, das Identifikationsobjekt 64 automatisch und berührungslos zu detektieren. Entsprechend gibt die Steuerungseinheit 26 das Schutztürsignal nur dann aus, wenn das Lesegerät 66 die Anwesenheit des Identifikationsobjekts 64 eindeutig detektiert. Auf diese Weise lässt sich die Manipulationssicherheit des Schutztürüberwachungssystems 10 vergrößern.

Beispielsweise handelt es sich bei dem Identifikationsobjekt 64 um einen RFID-Transponder und bei dem Lesegerät 66 um ein entsprechendes RFID-Lesegerät. Beispielsweise lässt sich auch die Funktion der Zuhaltung des Schutztürüberwachungsmoduls 16 nur dann aktivieren, wenn die Anwesenheit des RFID-Transponders eindeutig identifiziert wird.

Bei dem in Fig. 6A und 6B gezeigten Ausführungsbeispiel ist das Identifikationsobjekt 64 (bspw. der RFID-Transponder) in einer umfangsseitig am Betätigerelement 40 vorgesehene, ringförmige Ausnehmung angeordnet. Dies hat insbesondere den Vorteil, dass die Position des Identifikationsobjekts 64 nicht geändert werden muss, wenn die Ausrichtung des Betätigerelements 40 relativ zu der Halterung 60 verändert wird. In einem solchen Fall müsste das Identifikationsobjekt 64 in einer anderen Aufnahme 62 angeordnet werden.

Fig. 7-10 zeigen schematisch mehrere weitere Ausführungsvarianten des erfindungsgemäßen Schutztürüberwachungsmoduls 16, die sich insbesondere in der Art der Ausgestaltung des Grundgeräts 34 bzw. der an diesem vorgesehenen Betätigeraufnahme 38 voneinander unterscheiden.

In dem in Fig. 7A und 7B gezeigten Ausführungsbeispiel ist die Betätigeraufnahme 38 im Längsschnitt des Grundgeräts 34 betrachtet im Wesentlichen U-förmig. Der in Fig. 7A und 7B dargestellte Längsschnittform könnte jedoch auch als klauen- oder hakenförmig bezeichnet werden.

Ein Vorteil dieser relativ offenen Ausgestaltung der Betätigeraufnahme 38, wie sie in Fig. 7A und 7B gezeigt ist, ist die einfache und vielfältige Art der Zuführungsmöglichkeit des ringförmigen Betätigerelements 40 in die Betätigeraufnahme 38. Wie auch durch Zusammenschau mit Fig. 4 ersichtlich ist, lässt sich das Betätigerelement 40 bei einer derartigen Formgebung des Betätigerelements 40 und der Betätigeraufnahme 38 von einem relativ großen Schwenkbereich aus in die Betätigeraufnahme 38 einführen. In Fig. 7A und 7B ist mit einer gestrichelten Linie schematisch eine Ebene eingezeichnet, in der der mögliche Schwenkbereich des Betätigerelements 40 liegt. Diese Ebene 68 ist orthogonal zu der Längsschnittebene der in Fig. 7A und 7B gezeigten Längsschnittansichten ausgerichtet. Innerhalb dieser Ebene 68 lässt sich das ringförmige Betätigerelement 40 über einen Schwenkbereich von mindestens 90°, vorzugsweise von mindestens 120° zuverlässig in die Betätigeraufnahme 38 einführen. Dies ermöglicht eine Vielzahl unterschiedlicher Anwendungsmöglichkeiten des erfindungsgemäßen Schutztürüberwachungsmoduls 16.

Die Betätigeraufnahme 38 weist vorzugsweise eine Verriegelungseinrichtung 70 zum Verrieglen des Betätigerelements 40 in der Betätigeraufnahme 38 auf. In der in Fig. 7A und 7B dargestellten Ausführungsform umfasst diese Verriegelungseinrichtung eine federnd gelagerte Sperrklinke 72. Diese Sperrklinke 72 gewährleistet eine Vorzentrierung und gleichzeitig eine Arretierung des Betätigerelements 40 in der Betätigeraufnahme 38. Hierdurch lässt sich die Funktion der Zuhaltung der Schutztür 14 bewirken.

Anstelle einer Sperrklinke kann die Verriegelungseinrichtung 70 auch andere Arten von Verriegelungselementen 71 aufweisen. Unabhängig von der Art der Ausgestaltung des Verriegelungselements 71 ist es jedoch bevorzugt, dass dieses Verriegelungselement 71 elektrisch ansteuerbar ist, um dieses zu lösen und damit das Betätigerelement 40 automatisiert freigeben zu können. Beispielsweise löst die Steuerungseinheit 26 auf diese Weise die von dem Schutztürüberwachungsmodul 16 bewirkte Zuhaltung, sobald der Roboter 12 einen sicheren Zustand erreicht hat. Einem Benutzer ist es dann wieder möglich, die von dem Schutztürüberwachungsmodul 16 zugehaltene Schutztür 14 zu öffnen und Zugang zu dem Arbeitsbereich des Roboters 12 zu erhalten.

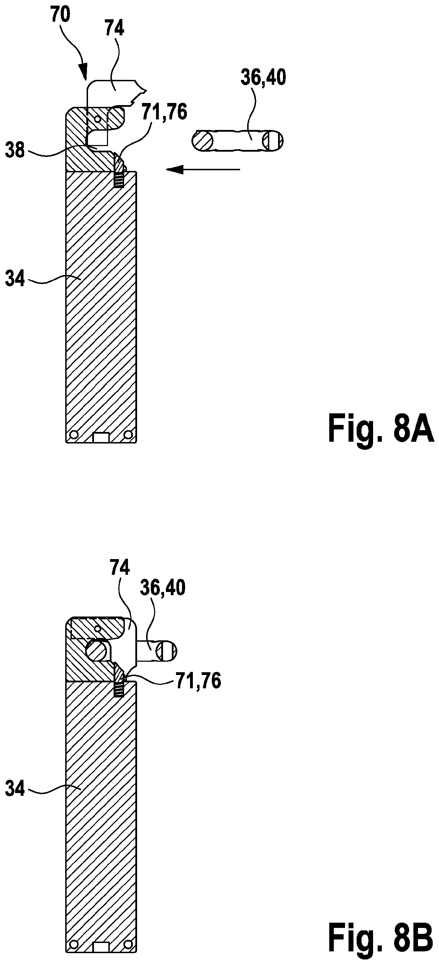

Fig. 8A und 8B zeigen ein Ausführungsbeispiel, in dem die Betätigeraufnahme 38 einen drehbar gelagerten Winkelhebel 74 aufweist, der in die zentrale Öffnung des ringförmigen Betätigerelements 40 eingreift, sobald das Betätigerelement 40 in die Betätigeraufnahme 38 eingeführt ist (siehe Fig. 8B). Der Winkelhebel 74 ist mit Hilfe eines Rastelements 76, das als Verriegelungselement 71 fungiert, verriegelbar bzw. arretierbar.

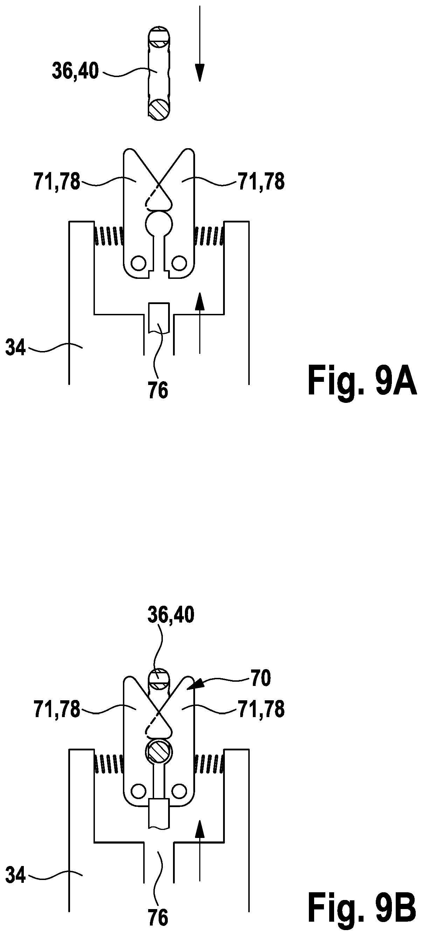

In dem in Fig. 9A und 9B gezeigten Ausführungsbeispiel weist die Verriegelungseinrichtung 70 zwei federgelagerte Verschlussteile 78 auf, die in der Art einer Zange in das ringförmige Betätigerelement 40 eingreifen, sobald dieses in die Betätigeraufnahme 38 eingeführt wird. Die beiden Verschlussteile 78 sind dazu federgelagert um parallel zueinander ausgerichtete Drehachsen drehbar. Diese Art der Ausführung ermöglicht auch eine Zuführung des Betätigers 36 senkrecht von oben in die Betätigeraufnahme 38.

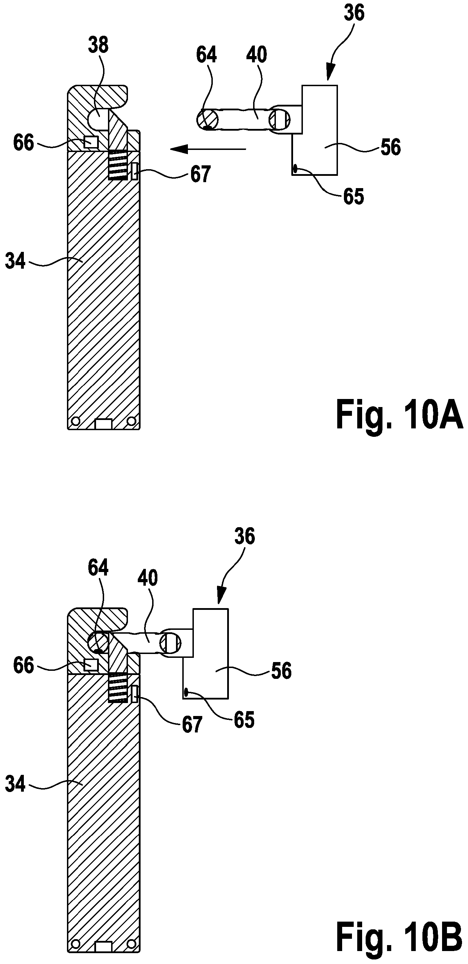

Fig. 10A und 10B zeigen ein weiteres Ausführungsbeispiel des Betätigers 36 und der Betätigeraufnahme 38. Form und Ausgestaltung des Betätigers 36 und der Betätigeraufnahme 38 ähneln dem in Fig. 7A und 7B gezeigten Ausführungsbeispiel. Hier ist in dem Montage-Sockel 56 des Betätigers 36 jedoch ein zusätzliches Identifikationsobjekt 65 angeordnet, das ähnlich wie das erste Identifikationsobjekt 64, welches in dem ringförmigen Betätigerelement 40 angeordnet ist, als RFID-Transponder ausgestaltet sein kann. In dem Grundgerät 34 sind dementsprechend entweder zwei Sensoren/Lesegeräte 66, 67 oder ein Sensor/Lesegerät vorgesehen, der beide Identifikationsobjekte 64, 65 detektieren und identifizieren kann. Die Steuerungseinheit 26 ist gemäß diesem Ausführungsbeispiel vorzugsweise dazu eingerichtet, das Schutztürsignal nur dann zu erzeugen, wenn beide Identifikationsobjekte 64, 65 detektiert und identifiziert werden. Auf diese Weise kann bspw. verhindert werden, dass das Schutztürsignal auch dann noch erzeugt wird, wenn es zu einem Bruch oder einer sonstigen Beschädigung gekommen ist, durch die sich das ringförmige Betätigerelement 40 von dem Montage-Sockel 56 gelöst hat.

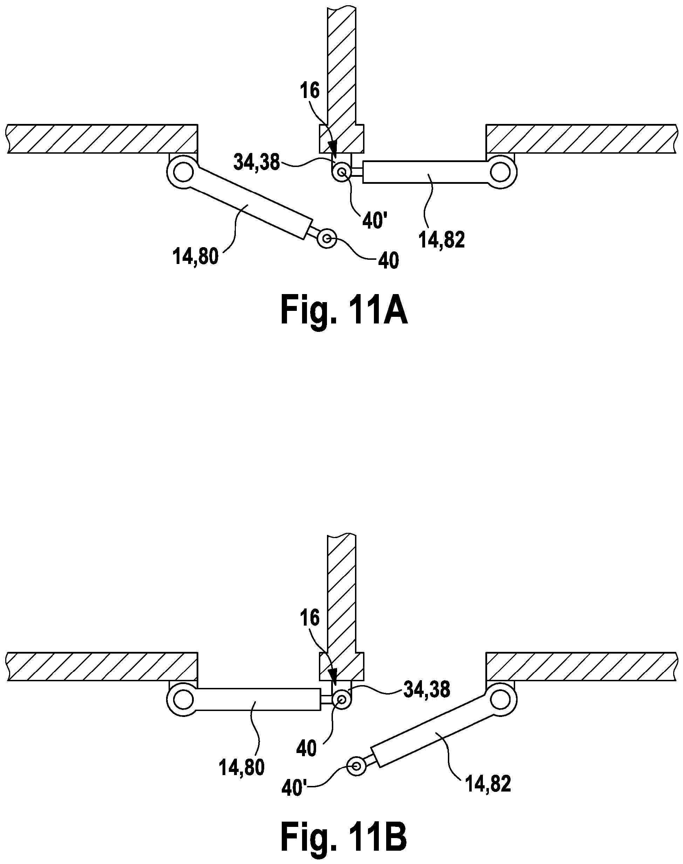

Eine zweite Anwendungsmöglichkeit eines solchen Ausführungsbeispiels mit zwei verschiedenen Identifikationsobjekten 64, 65 besteht in der Absicherung von zwei verschiedenen Räumen mit zwei verschiedenen Türen mit nur einer Zuhaltung, also nur einem Grundgerät 34. Beispielsweise kann es vorgesehen sein, dass erst ein Raum zu öffnen ist, bevor der andere Raum verschlossen werden kann. Hier hat die vorliegende Ausführungsform den Vorteil, dass aufgrund der zwei verschiedenen Identifikationsobjekte 64, 65 der Zuhaltung kenntlich gemacht werden kann, welche der beiden Türen verschlossen ist. Eine derartige Anwendungsmöglichkeit ist in Fig. 11A und 11B schematisch dargestellt. Beispielsweise kann die Tür 80 erst dann verschlossen werden, wenn die Tür 82 geöffnet wird. In diesem Fall weist das Schutztürüberwachungsmodul 16 ein Grundgerät 34 mit einer Betätigeraufnahme 38 auf, in die beide Betätigerelemente 40, 40' abwechselnd einführbar sind.

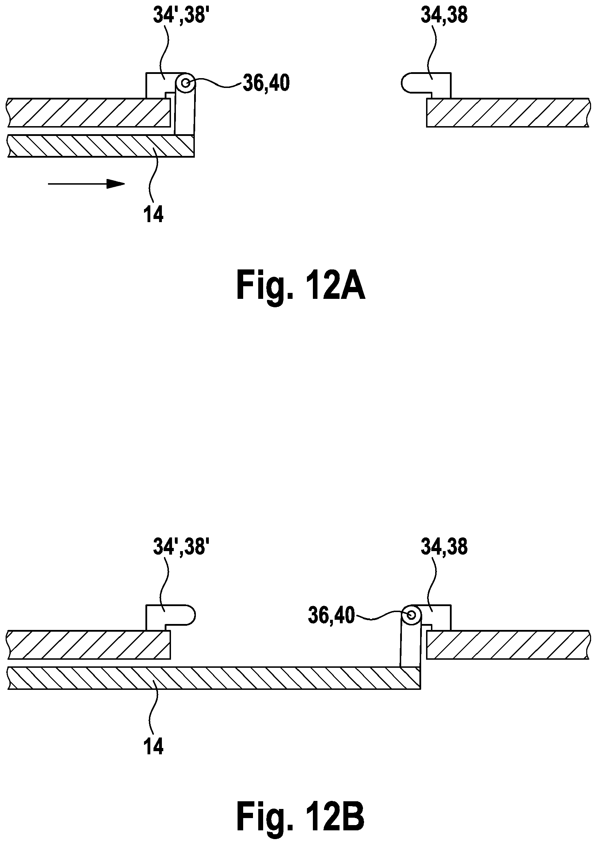

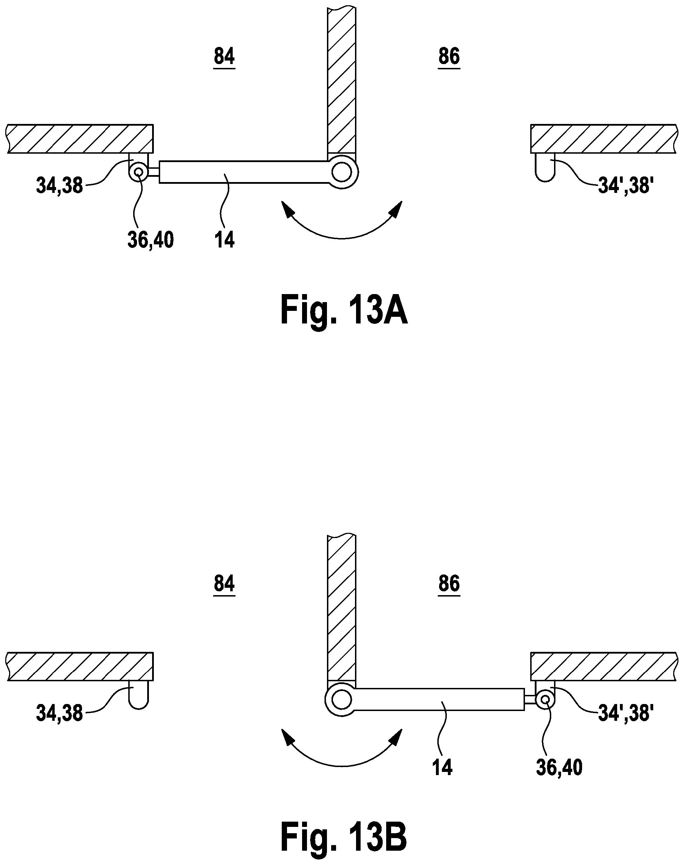

Weitere Anwendungsmöglichkeiten des erfindungsgemäßen Schutztürüberwachungsmoduls 16 sind in den Figuren 12 und 13 dargestellt. Diese beiden Anwendungsbeispiele verdeutlichen, dass der Betätiger 36 "links wie rechts" verwendbar ist. Die Schutztür 14 kann demnach ein Schutztürüberwachungsmodul 16 mit einem Betätiger 36 aber zwei Grundgeräten 34, 34' bzw. zwei Betätigeraufnahmen 38, 38' aufweisen. Die beiden Grundgeräte 34, 34' können bspw. derart angeordnet sein, dass das erste Grundgerät 34 die geschlossene Stellung der Schutztür 14 detektiert und das zweite Grundgerät 34' die geöffnete Stellung der Schutztür 14 detektiert. Der Betätiger 36 kann ohne Umbau bzw. ohne Änderung von dessen räumlicher Ausrichtung in die Betätigeraufnahmen 38, 38' beider Grundgeräte 34, 34' problemlos eingeführt werden. Auf diese Weise können unterschiedliche Schutztürsignale an die Steuerungseinheit 26 weitergegeben werden, nämlich bspw. ein erste Schutztürsignal, das durch das erste Grundgerät 34 erzeugt wird, wenn sich die Schutztür 14 in ihrer geschlossenen Stellung befindet, und ein zweites Schutztürsignal, das von dem zweiten Grundgerät 34' erzeugt wird, wenn sich die Schutztür 14 in ihrer geöffneten Stellung befindet.

Dieses Prinzip ist nicht nur bei einer als Schiebetür 14, wie sie schematisch in Fig. 12A und 12B dargestellt ist, anwendbar, sondern in äquivalenter Form auch bei einer Schwenktür. Letzteres ist in Fig. 13A und 13 B dargestellt, wobei hier zusätzlich noch der Aspekt verdeutlicht wird, dass es damit auch generell möglich ist mit ein und derselben Schutztür 14 und einem Schutztürüberwachungsmodul 16, das einen einzigen Betätiger 36, aber zwei Grundgeräte 34, 34' aufweist, zwei verschiedene Räume 84, 86 sicher zu überwachen.

## Patentansprüche

1. Schutztürüberwachungsmodul (16) zur Überwachung eines Zustands einer Schutztür (14), mit einem Grundgerät (34) zur Erzeugung eines Schutztürsignals und einem relativ zu dem Grundgerät (34) beweglichen Betätiger (36) zum Betätigen des Grundgeräts (34), wobei das Grundgerät (34) eine Betätigeraufnahme (38) zur Aufnahme des Betätigers (36) aufweist und dazu eingerichtet ist, das Schutztürsignal zu erzeugen, wenn der Betätiger (36) in die Betätigeraufnahme (38) eingeführt ist,
wobei der Betätiger (36) ein im Wesentlichen ringförmiges Betätigerelement (40) aufweist, das in die Betätigeraufnahme (38) einführbar ist, und
wobei die Betätigeraufnahme (38) und das Betätigerelement (40) derart ausgestaltet sind, dass das Betätigerelement (40) in mindestens zwei verschiedenen räumlichen Ausrichtungen relativ zu dem Grundgerät (34) in die Betätigeraufnahme (38) einführbar ist,
**dadurch gekennzeichnet, dass** die mindestens zwei verschiedenen räumlichen Ausrichtungen eine erste, eine zweite und eine dritte räumliche Ausrichtung (42, 44, 46) des Betätigerelements (40) relativ zu dem Grundgerät (34) umfassen, wobei die zweite räumliche Ausrichtung (44) im Vergleich zu der ersten räumlichen Ausrichtung (42) um eine erste Raumachse (50) um 90° rotiert ist, und wobei die dritte räumliche Ausrichtung (46) im Vergleich zu der zweiten räumlichen Ausrichtung (44) um eine zweite Raumachse (52), die orthogonal zu der ersten Raumachse (50) ausgerichtet ist, um 90° rotiert ist.

2. Schutztürüberwachungsmodul nach Anspruch 1, wobei das Betätigerelement (40) zumindest abschnittsweise die Form eines Torus hat.

3. Schutztürüberwachungsmodul nach Anspruch 1 oder 2, wobei das Betätigerelement (40) eine Ringmutter (58) aufweist.

4. Schutztürüberwachungsmodul nach einem der Ansprüche 1-3, wobei das Grundgerät (34) einen Sensor oder ein Lesegerät (66) aufweist, der bzw. das detektiert, ob der Betätiger (36) in die Betätigeraufnahme (38) eingeführt ist.

5. Schutztürüberwachungsmodul nach Anspruch 4, wobei das Betätigerelement (40) ein Identifikationsobjekt (64) aufweist und der Sensor oder das Lesegerät (66) dazu eingerichtet ist, das Identifikationsobjekt (64) automatisch und berührungslos zu detektieren, und wobei das Grundgerät (34) dazu eingerichtet ist, das Schutztürsignal zu erzeugen, wenn der Sensor oder das Lesegerät (66) das Identifikationsobjekt (64) detektiert.

6. Schutztürüberwachungsmodul nach einem der Ansprüche 1-5, wobei der Betätiger (34) eine Halterung (60) aufweist, an der das Betätigerelement (40) lösbar befestigt ist, wobei sich das Betätigerelement (40) in seiner Position relativ zu der Halterung (60) justieren und in einer gewünschten Position an der Halterung (60) arretieren lässt.

7. Schutztürüberwachungsmodul nach einem der Ansprüche 1-6, wobei die Betätigeraufnahme (38) in einem Längsschnitt des Grundgeräts (34) betrachtet klauen-, haken- oder U-förmig ist und für das Betätigerelement (40) von einem Schwenkbereich aus zugänglich ist, der sich über mindestens 90° erstreckt und in einer Ebene (68) liegt, die orthogonal zu dem Längsschnitt ausgerichtet ist.

8. Schutztürüberwachungsmodul nach einem der Ansprüche 1-7, wobei die Betätigeraufnahme (38) eine Verriegelungseinrichtung (70) zum Verriegeln des Betätigerelements (40) in der Betätigeraufnahme (38) aufweist.

9. Schutztürüberwachungsmodul nach Anspruch 8, wobei die Verriegelungseinrichtung (70) ein Verriegelungselement (71) aufweist, das elektrisch ansteuerbar ist, um dieses zu lösen und damit das Betätigerelement (40) freizugeben.

10. Schutztürüberwachungsmodul nach Anspruch 8 oder 9, wobei die Verriegelungseinrichtung (70) mindestens eines der folgenden Bauteile aufweist:
- einen drehbar gelagerten Winkelhebel (74), der in das im Wesentlichen ringförmige Betätigerelement (40) eingreift;
- eine federgelagerte Sperrklinke (72); oder
- zwei federgelagerte Verschlussteile (78), die in der Art einer Zange in das im Wesentlichen ringförmige Betätigerelement (40) eingreifen.

11. Schutztürüberwachungsmodul (16) zur Überwachung eines Zustands einer Schutztür (14), mit einem Grundgerät (34) zur Erzeugung eines Schutztürsignals und einem relativ zu dem Grundgerät (34) beweglichen Betätiger (36) zum Betätigen des Grundgeräts (34), wobei das Grundgerät (34) eine Betätigeraufnahme (38) zur Aufnahme des Betätigers (36) aufweist und dazu eingerichtet ist, das Schutztürsignal zu erzeugen, wenn der Betätiger (36) in die Betätigeraufnahme (38) eingeführt ist,
wobei der Betätiger (36) ein im Wesentlichen ringförmiges Betätigerelement (40) aufweist, das in die Betätigeraufnahme (38) einführbar ist,
**dadurch gekennzeichnet, dass** das Betätigerelement (40) eine Ringmutter (58) aufweist.

12. Schutztürüberwachungssystem (10) mit:
- einer Schutztür (14) als Zugang zu einem Sicherheitsbereich,
- einem Schutztürüberwachungsmodul (16) gemäß einem der Ansprüche 1-11 zur Überwachung eines Zustands der Schutztür (14); und
- einer Steuerungseinheit (26), welche dazu eingerichtet ist, das Schutztürsignal auszulesen und eine im Sicherheitsbereich befindliche Maschine oder Anlage (12) in Abhängigkeit des Schutztürsignals zu steuern.

13. Schutztürüberwachungssystem gemäß Anspruch 12, wobei das Schutztürüberwachungsmodul (16) ferner ein zweites Grundgerät (34) mit einer zweiten Betätigeraufnahme (38') zur Aufnahme des Betätigers (36) aufweist, wobei das zweite Grundgerät (34') dazu eingerichtet ist, ein zweites Schutztürsignal zu erzeugen, wenn der Betätiger (36) in die zweite Betätigeraufnahme (38') eingeführt ist, wobei der Betätiger (36) in die Betätigeraufnahme (38) eingeführt ist, wenn sich die Schutztür (14) in einer geschlossenen Stellung befindet, und wobei der Betätiger (36) in die zweite Betätigeraufnahme (38') eingeführt ist, wenn sich die Schutztür (14) in einer geöffneten Stellung befindet, wobei die Steuerungseinheit (26) dazu eingerichtet ist, auch das zweite Schutztürsignal auszulesen und die im Sicherheitsbereich befindliche Maschine oder Anlage (12) auch in Abhängigkeit des zweiten Schutztürsignals zu steuern.

## Claims

1. Safety gate monitoring module (16) for monitoring a state of a safety gate (14), comprising: a base unit (34) for generating a safety gate signal and an actuator (36), which can be moved relative to the base unit (34), for actuating the base unit (34), the base unit (34) having an actuator receptacle (38) for receiving the actuator (36) and being configured to generate the safety gate signal when the actuator (36) is inserted into the actuator receptacle (38),
wherein the actuator (36) has a substantially annular actuator element (40) which can be inserted into the actuator receptacle (38), and
wherein the actuator receptacle (38) and the actuator element (40) are configured in such a way that the actuator element (40) can be inserted into the actuator receptacle (38) in at least two different spatial orientations relative to the base unit (34),
**characterized in that** the at least two different spatial orientations comprise a first, a second and a third spatial orientation (42, 44, 46) of the actuator element (40) relative to the base unit (34), wherein the second spatial orientation (44) is rotated 90° relative to the first spatial orientation (42) about a first spatial axis (50), and wherein the third spatial orientation (46) is rotated 90° relative to the second spatial orientation (44) about a second spatial axis (52) that is orthogonal to the first spatial axis (50).

2. Safety gate monitoring module according to claim 1, wherein the actuator element (40) has at least in sections the shape of a torus.

3. Safety gate monitoring module according to claim 1 or 2, wherein the actuator element (40) comprises a ring nut (58).

4. Safety gate monitoring module according to any one of claims 1-3, wherein the base unit (34) comprises a sensor or a reader (66) which detects whether the actuator (36) is inserted into the actuator receptacle (38).

5. Safety gate monitoring module according to claim 4, wherein the actuator element (40) comprises an identification object (64) and the sensor or the reader (66) is configured to detect the identification object (64) automatically and contactlessly, and wherein the base unit (34) is configured to generate the safety gate signal when the sensor or the reader (66) detects the identification object (64).

6. Safety gate monitoring module according to any one of claims 1-5, wherein the actuator (34) comprises a holder (60) to which the actuator element (40) is detachably attached, wherein the actuator element (40) can be adjusted in its position relative to the holder (60) and can be locked in a desired position on the holder (60).

7. Safety gate monitoring module according to any one of claims 1-6, wherein the actuator receptacle (38) is claw-shaped, hook-shaped or U-shaped when viewed in a longitudinal section of the base unit (34) and is accessible to the actuator element (40) from a pivoting range which extends over at least 90° and lies in a plane (68) which is aligned orthogonally to the longitudinal section.

8. Safety gate monitoring module according to any one of claims 1-7, wherein the actuator receptacle (38) comprises a locking device (70) for locking the actuator element (40) in the actuator receptacle (38).

9. Safety gate monitoring module according to claim 8, wherein the locking device (70) has a locking element (71) which can be electrically actuated in order to release it and thus release the actuator element (40).

10. Safety gate monitoring module according to claim 8 or 9, wherein the locking device (70) comprises at least one of the following components:
- a rotatably mounted angle lever (74), which engages in the substantially annular actuator element (40);
- a spring-loaded pawl (72); or
- two spring-loaded locking parts (78) which engage in the substantially annular actuator element (40) in the manner of pliers.

11. Safety gate monitoring module (16) for monitoring a state of a safety gate (14), comprising: a base unit (34) for generating a safety gate signal and an actuator (36), which can be moved relative to the base unit (34), for actuating the base unit (34), the base unit (34) having an actuator receptacle (38) for receiving the actuator (36) and being configured to generate the safety gate signal when the actuator (36) is inserted into the actuator receptacle (38),
wherein the actuator (36) has a substantially annular actuator element (40) which can be inserted into the actuator receptacle (38),
**characterized in that** the actuator element (40) has a ring nut (58).

12. Safety gate monitoring system (10), comprising:
- a safety gate (14) as access to a safety area,
- a safety gate monitoring module (16) according to any one of claims 1-11 for monitoring a state of the safety gate (14); and
- a control unit (26) configured to read out the safety gate signal and to control a machine or system (12) located in the safety area as a function of the safety gate signal.

13. A safety gate monitoring system according to claim 12, wherein the safety gate monitoring module (16) further comprises a second base unit (34) having a second actuator receptacle (38') for receiving the actuator (36), wherein the second base unit (34') is configured to generate a second safety gate signal when the actuator (36) is inserted into the second actuator receptacle (38'), wherein the actuator (36) is inserted into the actuator receptacle (38) when the safety gate (14) is in a closed position, and wherein the actuator (36) is inserted into the second actuator receptacle (38') when the safety gate (14) is in an open position, wherein the control unit (26) is configured to also read out the second safety gate signal and to control the machine or system (12) located in the safety area as a function of the second safety gate signal.

## Revendications

1. Module de surveillance de porte de protection (16) permettant de surveiller un état d'une porte de protection (14), comprenant un dispositif de base (34) pour générer un signal de porte de protection et un actionneur (36) mobile par rapport au dispositif de base (34) pour actionner le dispositif de base (34), dans lequel le dispositif de base (34) présente un logement d'actionneur (38) pour recevoir l'actionneur (36) et est conçu pour générer le signal de porte de protection lorsque l'actionneur (36) est introduit dans le logement d'actionneur (38),
dans lequel l'actionneur (36) présente un élément d'actionneur (40) substantiellement annulaire qui peut être introduit dans le logement d'actionneur (38), et
dans lequel le logement d'actionneur (38) et l'élément d'actionneur (40) sont configurés de telle sorte que l'élément d'actionneur (40) peut être introduit dans le logement d'actionneur (38) dans au moins deux orientations spatiales différentes par rapport au dispositif de base (34),
**caractérisé en ce que** lesdites au moins deux orientations spatiales différentes comprennent une première, une deuxième et une troisième orientation spatiale (42, 44, 46) de l'élément d'actionnement (40) par rapport au dispositif de base (34), dans lequel, en comparaison avec la première orientation spatiale (42), la deuxième orientation spatiale (44) est tournée de 90° autour d'un premier axe spatial (50), et dans lequel, en comparaison avec la deuxième orientation spatiale (44), la troisième orientation spatiale (46) est tournée de 90° autour d'un deuxième axe spatial (52) qui est orienté orthogonalement au premier axe spatial (50).

2. Module de surveillance de porte de protection selon la revendication 1, dans lequel l'élément d'actionnement (40) présente au moins par endroits la forme d'un tore.

3. Module de surveillance de porte de protection selon la revendication 1 ou 2, dans lequel l'élément d'actionnement (40) présente un écrou à anneau (58).

4. Module de surveillance de porte de protection selon l'une quelconque des revendications 1 à 3, dans lequel le dispositif de base (34) présente un capteur ou un lecteur (66) qui détecte si l'actionneur (36) est introduit dans le logement d'actionneur (38).

5. Module de surveillance de porte de protection selon la revendication 4, dans lequel l'élément d'actionnement (40) présente un objet d'identification (64), et le capteur ou le lecteur (66) est conçu pour détecter l'objet d'identification (64) automatiquement et sans contact, et dans lequel le dispositif de base (34) est conçu pour générer le signal de porte de protection lorsque le capteur ou le lecteur (66) détecte l'objet d'identification (64).

6. Module de surveillance de porte de protection selon l'une quelconque des revendications 1 à 5, dans lequel l'actionneur (34) présente un support (60) auquel l'élément d'actionneur (40) est fixé de manière amovible, l'élément d'actionneur (40) pouvant être ajusté au niveau de sa position et pouvant être bloqué par rapport au support (60) dans une position souhaitée sur le support (60).

7. Module de surveillance de porte de protection selon l'une quelconque des revendications 1 à 6, dans lequel le logement d'actionneur (38), vu en section longitudinale du dispositif de base (34), présente une forme de griffe, de crochet ou de U et est accessible à l'élément d'actionneur (40) à partir d'une zone de pivotement qui s'étend sur au moins 90° et se situe dans un plan (68) qui est orienté orthogonalement à la section longitudinale.

8. Module de surveillance de porte de protection selon l'une quelconque des revendications 1 à 7, dans lequel le logement d'actionneur (38) présente un dispositif de verrouillage (70) pour verrouiller l'élément d'actionneur (40) dans le logement d'actionneur (38).

9. Module de surveillance de porte de protection selon la revendication 8, dans lequel le dispositif de verrouillage (70) présente un élément de verrouillage (71) qui peut être piloté électriquement pour le détacher et libérer ainsi l'élément d'actionneur (40).

10. Module de surveillance de porte de protection selon la revendication 8 ou 9, dans lequel le dispositif de verrouillage (70) présente au moins l'un des composants suivants :
- un levier coudé (74) monté rotatif, qui vient en prise avec l'élément d'actionneur (40) substantiellement annulaire ;
- un cliquet d'arrêt (72) monté sur ressort ; ou
- deux pièces de fermeture (78) montées sur ressort qui viennent en prise à la manière d'une pince dans l'élément d'actionneur (40) substantiellement annulaire.

11. Module de surveillance de porte de protection (16) permettant de surveiller un état d'une porte de protection (14), comprenant un dispositif de base (34) pour générer un signal de porte de protection et un actionneur (36) mobile par rapport au dispositif de base (34) pour actionner le dispositif de base (34), dans lequel le dispositif de base (34) présente un logement d'actionneur (38) pour recevoir l'actionneur (36) et est conçu pour générer le signal de porte de protection lorsque l'actionneur (36) est introduit dans le logement d'actionneur (38),
dans lequel l'actionneur (36) présente un élément d'actionneur (40) substantiellement annulaire qui peut être introduit dans le logement d'actionneur (38),
**caractérisé en ce que** l'élément d'actionneur (40) présente un écrou à anneau (58).

12. Système de surveillance de porte de protection (10), comprenant :
- une porte de protection (14) comme accès à une zone de sécurité,
- un module de surveillance de porte de protection (16) selon l'une quelconque des revendications 1 à 11 pour surveiller un état de la porte de protection (14) ; et
- une unité de commande (26) qui est conçue pour lire le signal de porte de protection et pour commander une machine ou une installation (12) se trouvant dans la zone de sécurité en fonction du signal de porte de protection.

13. Système de surveillance de porte de protection selon la revendication 12, dans lequel le module de surveillance de porte de protection (16) présente en outre un deuxième dispositif de base (34) muni d'un deuxième logement d'actionneur (38') pour recevoir l'actionneur (36), dans lequel le deuxième dispositif de base (34') est conçu pour générer un deuxième signal de porte de protection lorsque l'actionneur (36) est introduit dans le deuxième logement d'actionneur (38'), dans lequel l'actionneur (36) est introduit dans le logement d'actionneur (38) si la porte de protection (14) se trouve dans une position fermée, et dans lequel l'actionneur (36) est introduit dans le deuxième logement d'actionneur (38') si la porte de protection (14) se trouve dans une position ouverte, dans lequel l'unité de commande (26) est conçue pour lire également le deuxième signal de porte de protection et pour commander une machine ou une installation (12) se trouvant dans la zone de sécurité également en fonction du deuxième signal de porte de protection.
